# EUROPEAN PATENT SPECIFICATION

(11) **EP 4 388 234 B1**
(45) Date of publication and mention of the grant of the patent: **08.10.2025**
(21) Application number: 22764997.7
(22) Date of filing: 16.08.2022
(51) Int. Cl.: F16L 1/20, F16L 1/235, F16L 1/19

(54) **METHOD OF LAYING AN ASSEMBLY OF A FLEXIBLE ELONGATE ELEMENT AND A RIGID ACCESSORY INTO WATER FROM AN INSTALLATION VESSEL, ASSEMBLY FOR SUBSEA INSTALLATION THEREOF**
VERFAHREN ZUM VERLEGEN EINER ANORDNUNG AUS EINEM FLEXIBLEN LÄNGLICHEN ELEMENT UND EINEM STARREN ZUBEHÖR ZUM EINTAUCHEN IN WASSER VON EINEM INSTALLATIONSSCHIFF, BAUGRUPPE FÜR DESSEN UNTERWASSERINSTALLATION
PROCÉDÉ DE POSE D'UN ASSEMBLAGE D'UN ÉLÉMENT ALLONGÉ FLEXIBLE ET D'UN ACCESSOIRE RIGIDE DANS L'EAU À PARTIR D'UN NAVIRE DE POSE, ENSEMBLE POUR LA POSE SOUS-MARINE DE CELUI-CI

(30) Priority: 18.08.2021 GB 202111868
(43) Date of publication of application: 26.06.2024
(73) Proprietor: Subsea 7 Do Brasil Serviços Ltda., 24050-090 Niterói - RJ (BR)
(72) Inventor: RAMIRO AMORIM, Andre, 22795-165 Rio de Janeiro - RJ (BR); CIOTTI CHAMMA, Fabricio, 22051-001 Rio de Janeiro - RJ (BR); OLIVEIRA RIBEIRO, Felipe, 24230-321 Niterói - RJ (BR); VAZ COELHO, João Luiz, 22040-001 Rio de Janeiro - RJ (BR); MIRANDA BARBOSA, Nicholas, 22280-020 Rio de Janeiro - RJ (BR)
(74) Representative: Keltie LLP
(86) International application number: PCT/BR2022/050319
(87) International publication number: WO 2023/019334

(56) References cited:
- WO-A1-2014/148907
- GB-A- 2 173 760
- GB-A- 2 520 512
- US-A- 5 947 641

## Description

This invention relates to the installation of elongate flexible elements such as flexible subsea pipelines, in particular to how such elements are guided aboard installation vessels as they are advanced onto a launch axis during installation. The invention particularly addresses the challenges of passing a rigid accessory of a flexible pipeline, such as a terminal head or end fitting at an end of the pipeline, over a guide of a pipelay tower while controlling local curvature and stress of the pipeline.

It is common for a flexible subsea pipeline to be laid on a nominally vertical launch axis from a pipelay tower of an installation vessel. Conventionally, this involves bending the pipeline around a circular or part-circular guide mounted high on the tower during movement of the pipeline between a storage location and the nominally vertical lay direction.

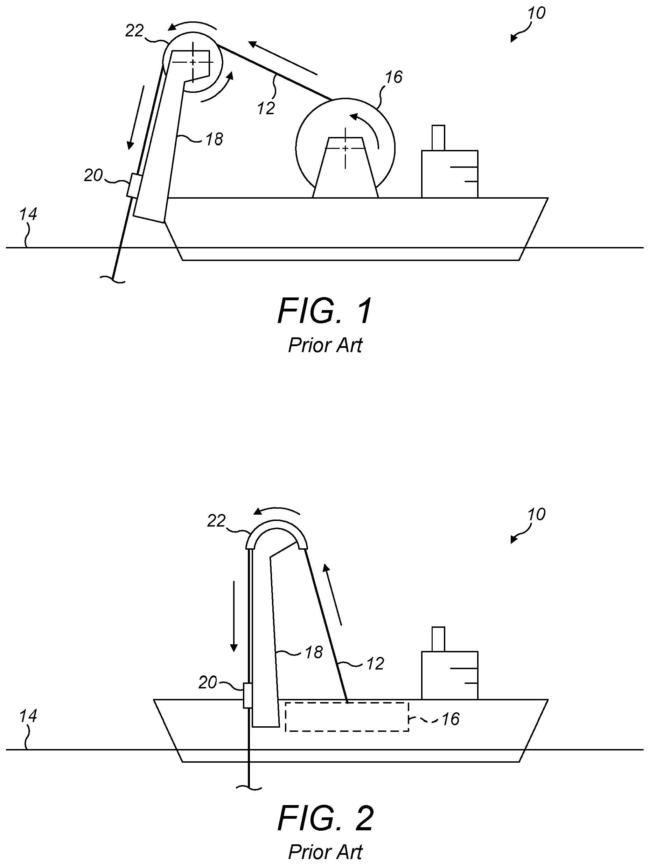

In this respect, Figures 1 and 2 show conventional pipelay support vessels (PLSVs) 10 laying a flexible pipeline 12 beneath the surface 14. Each PLSV 10 has a pipeline store 16, that of Figure 1 being a reel turning on a horizontal axis and that of Figure 2 being a carousel in which the pipeline 12 is wound around a vertical axis. Each PLSV 10 also has an upright pipelay tower 18 over which the pipeline 12 extends upwardly from the store 16 before curving onto a downward path and then extending through a hold-back system, such as a tensioner 20, to enter the sea on a launch axis corresponding to the inclination of the tower 18.

The pipeline 12 is guided as it bends over the top of the tower 18 by a curved guide 22 that permits longitudinal movement but restrains lateral movement of the pipeline 12. For this purpose, the guide 22 is upwardly convex in a longitudinal direction to define a curved transition path between upward and downward movement of the pipeline 12. The radius of longitudinal curvature of the guide 22 is large enough to respect the minimum bend radius (MBR) of the pipeline 12.

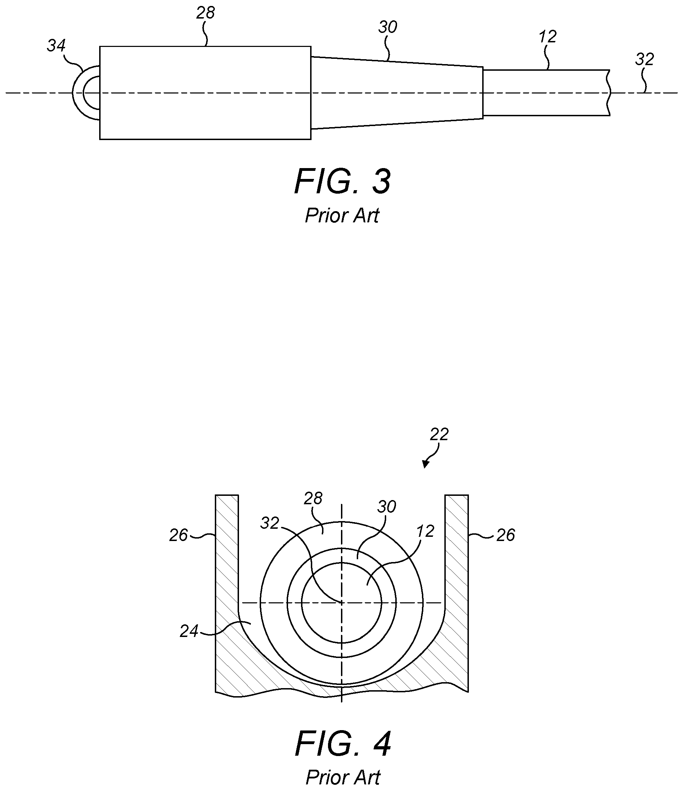

Conversely, the guide 22 is upwardly concave in a transverse direction as shown schematically in the cross-section of Figure 4. Thus, the guide 22 defines an upwardly-facing, longitudinally- or circumferentially-extending groove or channel 24 that receives and restrains lateral movement of the pipeline 12 between upwardly-extending side walls 26 of the channel 24.

In Figure 1, the guide 22 is a guide wheel that turns about a horizontal axis as the pipeline 12 advances. Conversely, in Figure 2, the guide 22 is a static guide chute through which the advancing pipeline 12 slides. The guide chute embodying the guide 22 is shown here as having constant part-circular curvature along its length but it could instead have variable curvature along its length.

PLSVs 10 have various configurations. For example, the launch axis defined by the pipelay tower 18 in Figure 1 is inclined slightly away from the vertical whereas the launch axis defined by the pipelay tower 18 in Figure 2 is substantially vertical. Also, the pipelay tower 18 in Figure 1 is at the stern of the PLSV 10 so that the launch axis is aft of the PLSV 10 whereas the pipelay tower 18 in Figure 1 is amidships so that the launch axis is over the side of the PLSV 10 or extends through a moonpool in the hull of the PLSV 10.

The abovementioned features of the PLSVs 10 exemplified in Figures 1 and 2 can of course be combined in various ways. For example, a guide wheel serving as the guide 22 in Figure 1 could surmount a vertical pipelay tower 18 like that of Figure 2.

A pipeline 12 may have in-line or terminal accessories that create discontinuities due to their different diameter, stiffness and weight relative to the adjoining sections of the pipeline 12. For example, a flexible pipeline 12 is characterised by a pliant composite layered structure of metallic wire armour and polymer layers and spacers terminating in rigid elongate flanged end fittings of steel that are typically of greater diameter than the adjoining composite structure. Other head structures, terminal modules or end fittings are possible. Figure 3 shows such a head 28 in addition to an optional bend stiffener 30 tapering away from the head 28 around the adjoining part of the pipeline 12. The head 28, the bend stiffener 30 and the pipeline 12 are co-axial along a central longitudinal axis 32. The head 28 has an anchor formation 34 at its distal end for the attachment of a line or link.

Figure 4 shows the head 28, bend stiffener 30 and pipeline 12 received in the upwardly-concave channel 24 of the guide 22. The rigidity and length of a terminal head 28 of a flexible pipeline 12 means that the head 28 cannot follow the longitudinal curvature of the guide 22. The head 28 could even be so wide that it cannot fit fully into the channel 24 of the guide 22. Thus, handling such heads 28 presents a challenge when advancing a flexible pipeline 12 along a longitudinally-curved path as it risks over-stressing and over-bending the pipeline 12, especially close to the interface between the pipeline 12 and the head 28. In this respect, flexible pipe has a smaller MBR than nominally rigid pipe but that MBR cannot be exceeded without causing irreversible damage to the pipe, unlike a rigid pipe that can be straightened following plastic deformation.

It will be apparent from Figure 4 that the greater cross-sectional radius of the head 28 holds the bend stiffener 30 and the pipeline 12 spaced apart from the base of the channel 24 in the guide 22. Thus, the bend stiffener 30 and the pipeline 12 are left suspended and hence unsupported by the guide 22, especially in the vulnerable portion of the pipeline 12 close to the interface between the pipeline 12 and the head 28.

The difficulty of handling the head 28 is compounded where successive pipelines 12 are linked via opposing heads 28 and stored end-to-end to be installed in the same installation campaign. In that case, a head 28 at the trailing end of the leading pipeline 12 is linked to a head 28 at the leading end of the trailing pipeline 12. Consequently, the leading pipeline 12 pulls the trailing pipeline 12 out of the pipe store 14 such as a reel or carousel, and the linked heads 28 must then pass over the guide 22 simultaneously. The leading pipeline 12 is subsequently separated from the trailing pipeline 12 and lowered to the seabed in an abandonment operation before laying of the trailing pipeline 12 is initiated at another installation site.

One way to handle a head 28 at the leading end of a flexible pipeline 12 is to use a crane or winch to lift the head 28 over the guide 22 and then to lower the adjoining part of the pipeline 12 into the channel 24 of the guide 22. This can be done using the main crane of the vessel or a dedicated hoist, like the crane or winches of WO 2016/133388 and WO 2014/148907, which can also be used to hold and lower the trailing end of the pipeline catenary during abandonment. However, it is an awkward operation to lift the head 28 and to insert the adjoining part of the pipeline 12 into the channel 24 while avoiding inadvertent over-stressing or over-bending of the pipeline 12. If opposed heads 28 are linked where pipelines 12 are arranged end-to-end, the operation is even more challenging.

Another approach disclosed in WO 2016/053094 and WO 2015/075511 is to use a swinging arm to displace the head 28 of the pipeline 12 along the curvature of the guide 22. However, this requires extensive and costly modification of the pipelay equipment.

In WO 2015/075555, a transport collar connects a point along the head 28 to a guide wheel. However, such an arrangement is unsuitable for use where the guide 22 is a static guide chute rather than a wheel.

GB 2520512 describes a transfer mechanism for transferring a fitting on a flexible tubular conduit about a guiding means of a pipelay tower.

In US 5947641, a series of packing elements support a pipeline on either side of a localised zone of increased stiffness of the pipeline, so as to guard against buckling in these regions when the pipeline is bent around an arcuate path.

GB 2173760 describes a handling device that guides a rigid pipeline accessory about a guide wheel.

Against this background, the invention resides in a method of laying an assembly of a flexible elongate element and a rigid accessory into water from an installation vessel. The accessory may, for example, be a head at an end of the element. The method comprises: advancing the assembly with the accessory and the element in longitudinal series and with an elongate longitudinally-curved cradle attached to the assembly, the cradle overlapping longitudinally with both the element and the accessory; and advancing the assembly and the cradle together over a longitudinally-convex guide mounted on a lay tower of the installation vessel, with the cradle interposed between the assembly on an upper side of the cradle and the guide on a lower side of the cradle.

The lower side of the cradle may suitably have a radius of longitudinally concave curvature that substantially matches a radius of longitudinally convex curvature of the guide. The lower side of the cradle may also have transversely convex curvature. In that case, where the guide comprises a longitudinally-extending channel, the lower side of the cradle may have a radius of transversely convex curvature that substantially matches a radius of transversely concave curvature of the channel.

Conversely, the upper side of the cradle may have a radius of transversely concave curvature that substantially matches a radius of transversely convex curvature of the accessory. More generally, the upper side of the cradle may have a radius of transversely concave curvature that is centred on an axis parallel to, or coincident with, a central longitudinal axis of the element.

The element may be supported on one or more supports disposed on a proximal side of the accessory, the or each support extending radially between the upper side of the cradle and an outer surface of the element. The or each support may, for example, have an end face with transversely concave curvature. The or each support may extend radially to a height corresponding to a cross-sectional radius of the accessory minus a cross-sectional radius of the element.

The element may be allowed to move away from the upper side of the cradle as the assembly and the cradle are advanced together toward or away from the guide. For example, the element can diverge from the cradle in a proximal direction. This may be achieved by allowing the element to lift away from the or each support fixed to the cradle, or by allowing the or each support fixed to the element to lift away from the cradle, or by causing the or each support fixed to the element and to the cradle to extend in a radially outward direction. Conversely, movement of the element toward the upper side of the cradle may be restrained.

First and second assemblies may be advanced together over the guide, the assemblies being linked end-to-end and each having a respective cradle interposed between the assembly and the guide. The first and second assemblies may, for example, be linked via their respective accessories. A link between the assemblies may be held spaced radially from the guide.

The cradle can be removed from the assembly before advancing the assembly through a hold-back system of the installation vessel, and more generally can be removed from the assembly and attached to another assembly for re-use.

The inventive concept embraces an assembly for subsea installation comprising a flexible elongate element and a rigid accessory in longitudinal series, in combination with an elongate longitudinally-curved cradle attached to, and laterally offset from a longitudinal axis of, the assembly. The cradle extends between and overlaps longitudinally with the element and the accessory and presents a first, longitudinally-convex side to the assembly opposed to a second, longitudinally-concave side extending along a length of the cradle. Equipment may be included to effect a transition between the head and the element.

One or more supports may be disposed on a proximal side of the accessory and may extend between the first side of the cradle and an outer surface of the element. The or each support may have an end face with transversely concave curvature, or may extend to a height corresponding to a cross-sectional radius of the accessory minus a cross-sectional radius of the element.

The or each support may be fixed to the element and separable from the cradle, or may be fixed to the cradle and separable from the element, or may be fixed to the cradle and to the element and of variable height.

The second side of the cradle suitably has transversely convex curvature. Conversely, the first side of the cradle may have a radius of transversely concave curvature that substantially matches a radius of transversely convex curvature of the accessory or that is centred on an axis parallel to, or coincident with, a central longitudinal axis of the element.

The inventive concept also embraces a combination of assemblies of the invention, linked end-to-end and each fitted with one of the cradles. The assemblies may, for example, be linked via their respective accessories.

In summary, the invention facilitates safe and speedy transfer of flexible pipeline sections over a guide such as a guide wheel of a PLSV pipelay tower, especially when performing twin transfer of adjoining, interconnected sections of flexible pipe. The solution of the invention involves a chute or cradle with the same radius of curvature as the guide, for example 5.6m, to accommodate a head or end fitting at the end of a pipeline section. The cradle is interposed between the head and the guide. The cradle may, for example, be made of a composite material to be light and easy to be handle.

The flexible pipeline and optionally also the head may be accommodated on supports on the cradle that limit curvature of the pipeline product. The supports may be fabricated based on each project specification, taking account of the outer diameter of the head and the flexible pipeline and the MBR of the flexible pipeline. The supports may also be made of a composite material.

The invention enables a major reduction in operational time and hence operational cost and project duration. Assuming six hours for a single transfer operation of the prior art versus up to two hours for a twin transfer manoeuvre of the invention, the time reduction expected for each manoeuvre is close to 66%. Assuming twenty-five such operations per year per PLSV, an aggregate time reduction of one hundred to one hundred and twenty-five hours per year will result, per PLSV.

The invention also has other benefits, such as removal of a crane or winch from the firing line and reduction or elimination of rigging. In addition to improved performance during installation, the installed pipeline can achieve production sooner than if installed by prior art methods.

Embodiments of the invention implement a method to guide at least one head of a flexible pipeline on a circular path groove of a flexible lay tower guide or wheel. The method comprises: attaching supports to the flexible pipeline along a predetermined section close to the head; and attaching an arcuate section of gutter or cradle along the head, wherein the cradle has the same radius of curvature as the guide or wheel. The supports are within a space in the transverse direction between the flexible pipeline and the cradle when the head and the flexible pipeline are on the guide or wheel.

The transverse radius of the cradle may correspond to the maximum radius of the head. The cradle is preferably longer than the head. The height of a support may equate to the radius of the cradle minus the radius of the flexible pipeline.

The supports could be free to move radially inside the cradle. The supports may, for example, be strapped to the pipeline. The supports could also partially support the head and any equipment effecting a transition between the head and the pipeline, such as a bend restrictor, stiffener, limiter or taper.

Embodiments of the invention also implement a method to guide the transition between two flexible pipelines on a circular path groove of a flexible lay tower guide or wheel. The method comprises: connecting the trailing end of a first flexible pipeline to the leading end of a second flexible pipeline by a transition device, the transition device being a pliant link such as a short chain or wire; and attaching a section of gutter or cradle to each end and supports between the section of cradle and flexible pipeline close to the end, so that the height of the supports allows the pliant link to remain taut between the two ends without touching the guide or wheel.

Thus, in the invention, an assembly of a rigid accessory such as an end fitting and a flexible elongate element such as a pipeline is laid from an installation vessel into water. The accessory and the element are in longitudinal series. An elongate longitudinally-curved cradle is attached to the assembly, the cradle overlapping longitudinally with both the element and the accessory. The assembly and the cradle are advanced together over a longitudinally-convex guide mounted on a lay tower of the vessel, with the cradle interposed between the assembly on one side of the cradle and the guide on the opposite side of the cradle. The cradle supports the flexible element to control its curvature and stress.

To put the invention into context by illustrating the prior art, reference has already been made to Figures 1 to 4 of the accompanying drawings, in which:
Figure 1 is a schematic side view of a conventional PLSV while laying a flexible pipeline, in which a lay tower of the PLSV supports a guide wheel;
Figure 2 is a schematic side view of another conventional PLSV while laying a flexible pipeline, in which a lay tower of the PLSV supports a guide chute;
Figure 3 is a schematic side view of an end portion of a flexible pipeline; and
Figure 4 is a schematic cross-sectional view of the end portion of the pipeline shown in Figure 3, received in a groove of a guide wheel or guide chute shown in Figures 1 and 2.

In order that the invention may be more readily understood, reference will now be made, by way of example, to the remainder of the drawings in which:
Figure 5 is a side view of an end portion of a flexible pipeline fitted with a supporting trough-like or gutter-like cradle of the invention;
Figure 6 is a side view of adjoining end portions of interconnected flexible pipelines each fitted with one of the cradles of Figure 5;
Figure 7 is a perspective view showing the interconnected pipelines of Figure 6, each fitted with a cradle of Figure 5, being transferred together to a lay tower of a PLSV;
Figure 8 is a sectional side view of the interconnected pipelines of Figure 7 fitted with cradles, passing over a guide wheel of the lay tower;
Figure 9 is a perspective view of the interconnected pipelines of Figure 7 fitted with cradles, passing over a guide wheel shown in Figure 8;
Figure 10 is a schematic side view of an end portion of a flexible pipeline fitted with a cradle of the invention and following the curvature of an underlying guide wheel or guide chute;
Figures 11a, 11b and 11c are cross sections on, respectively, lines A-A, B-B and C-C of Figure 10;
Figure 12 is a schematic side view of an end portion of a flexible pipeline fitted with a cradle of the invention, showing how longitudinal curvature of the pipeline can depart from longitudinal curvature of the cradle;
Figures 13a, 13b and 13c show variants of spacer supports of cradles of the invention; and
Figures 14a and 14b are graphs that model maximum curvature against length of a flexible pipeline passing over a guide wheel or guide chute, representing the invention and the prior art. Figure 14a represents the second or trailing end of a first pipeline and Figure 14b represents the first or leading end of a second pipeline joined end-to-end to the trailing end of the first pipeline.

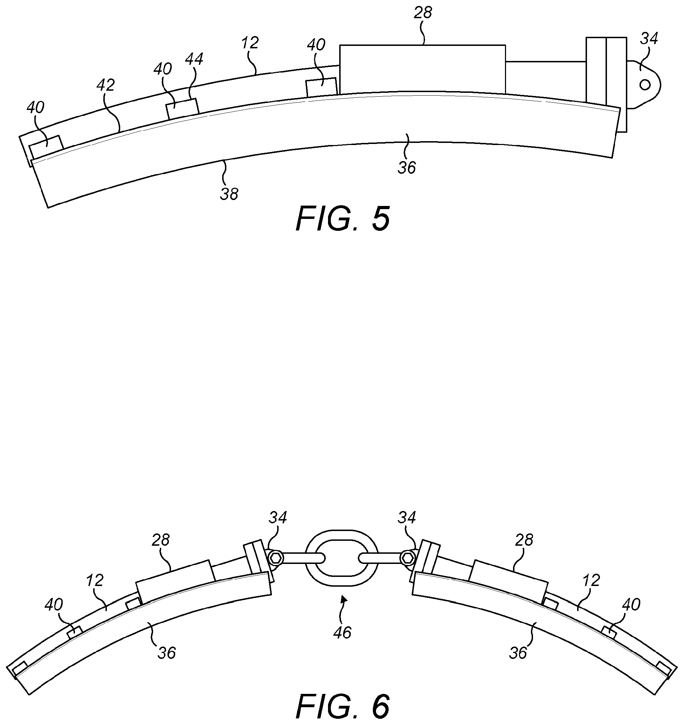

Referring next, then, to Figure 5, this shows a flexible pipeline 12 that terminates in an enlarged rigid head 28. In this example, a bend stiffener has been omitted for simplicity. In accordance with the invention, the head 28 and the pipeline 12 are both supported by an elongate curved rigid cradle 36 that underlies at least part of the head 28 and that extends proximally away from the head 28 to underlie the part of the pipeline 12 adjoining the head 28.

The cradle 36 is shaped to complement the shape of a channel 24 in the curved guide 22 of a pipelay tower. Specifically, the cradle 36 is upwardly convex and downwardly concave in a longitudinal direction. The underside 38 of the cradle 36 has a radius of longitudinal curvature that substantially matches or complements the radius of longitudinal or circumferential curvature of the base of the channel 24 in the guide 22.

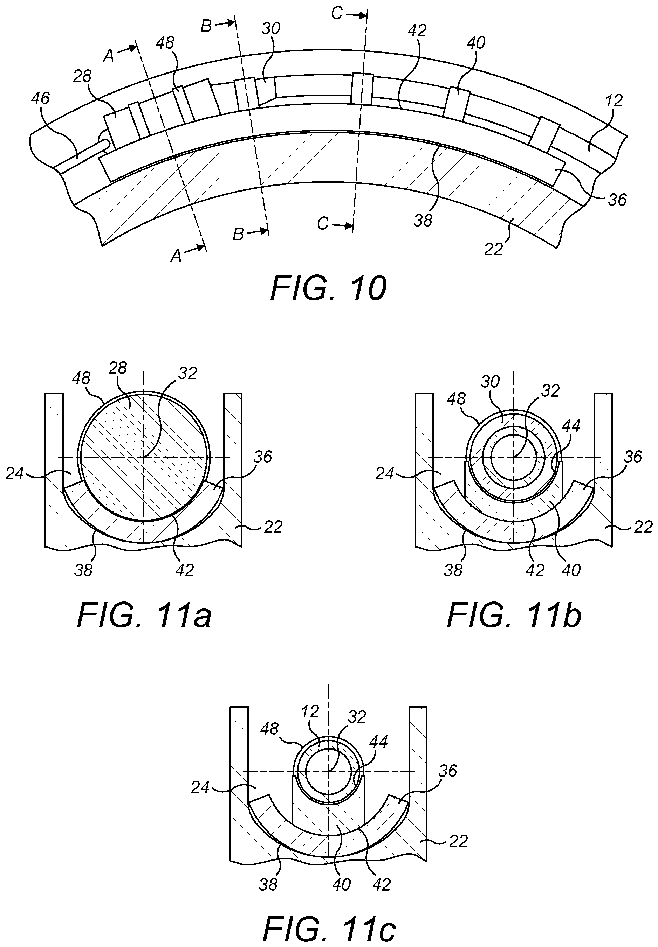

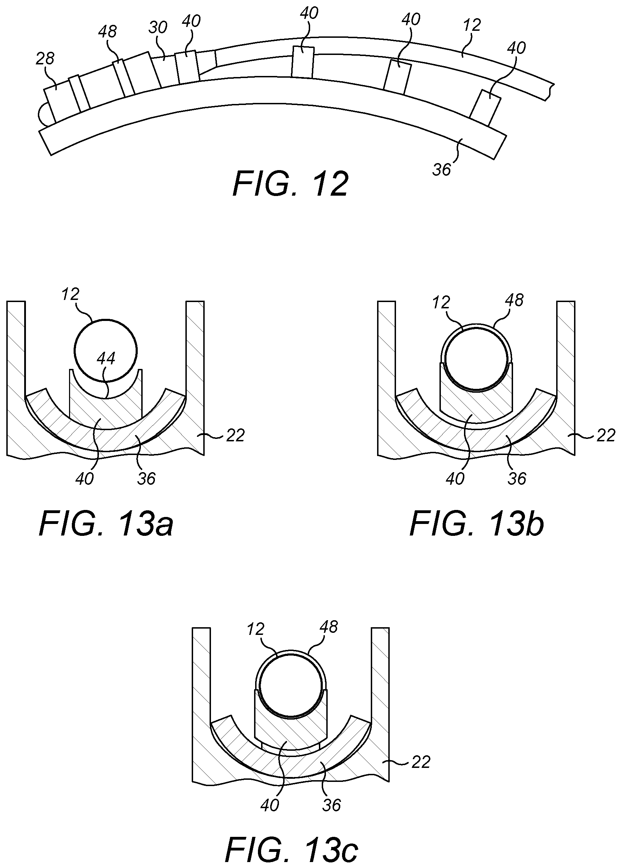

The cradle 36 is also upwardly concave and downwardly convex in a transverse direction. The underside 38 of the cradle 36 has a radius of transverse curvature that substantially matches or complements the radius of transverse curvature of the base of the channel 24 in the guide 22, as best appreciated in Figures 11a to 11c and 13a to 13c.

The portion of the pipeline 12 adjoining the head 28 is supported by a longitudinally-spaced series or array of supports 40. The head 28 may be supported directly by the cradle 36; alternatively, or additionally, one or more supports 40 could also be interposed between the cradle 36 and the head 28.

The supports 40 bridge the radial gap, with respect to the longitudinal curvature of the cradle 36, between the radially outer or upper side 42 of the cradle 36 and the outer diameter of the pipeline 12. This ensures that the pipeline 12 is supported along its length up its interface with the head 28.

Each support 40 has an upper end face 44 that is shaped to complement and engage with the external shape of the pipeline 12 and/or the head 28 as appropriate. Thus, as best appreciated in Figures 11b, 11c and 13a to 13c, the upper end face 44 of each support 40 is upwardly concave, with a part-cylindrical surface curved about a longitudinal axis. That axis is suitably coaxial with the central longitudinal axis 32 of the pipeline 12 and/or the head 28 as shown in Figures 11a to 11c.

The supports 40 may be separate from or integral with the cradle 36 but are preferably separate from the cradle 36, removably attachable and/or interchangeable. In this way, the longitudinal position, shape and/or height of the supports 40 can be tailored to suit the radius of the pipeline 12 and/or the head 28 or the MBR of the pipeline 12.

Whilst the cradle 36 of the invention can be used beneficially with a single pipeline 12, the invention has special benefits when used in a twin transfer operation involving pipelines 12 that are interconnected end-to-end. Such an arrangement is shown in Figure 6, where the pipelines 12 and their associated cradles 36 are in mirrored relation about a central plane between them. An articulated pliant link 46 comprising shackles and a central ring joins the anchor formations 34 of the heads 28 and is held in tension.

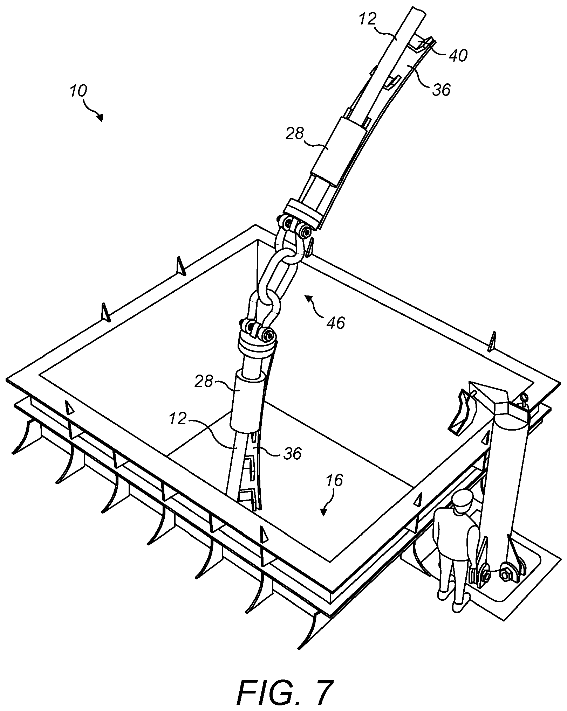

Figure 7 shows the interconnected pipelines 12 with their respective cradles 36 being pulled out of a carousel store 16 beneath a working deck of a PLSV 10. The cradles 36 may be fitted to the pipelines 12 before coiling the pipelines 12 into storage or after uncoiling the pipelines 12 from storage.

It will be noted that as the curvature of the pipelines 12 changes or straightens on their path from storage, the pipelines 12 can bend or pivot away from the cradles 36 and hence from the supports 40, which in this example are fixed to the cradles 36 and are not fixed to the pipelines 12. Thus, by decoupling the cradles 36 from the pipelines 12, the fixed curvature of the cradles 36 will not stress the pipelines 12 if the longitudinal curvature of the pipelines 12 tends to depart from that of the cradles 36. Conversely, the pipelines 12 can bend or pivot away from the cradles 36 but not from the supports 40, when they are not fixed to the pipelines 12.

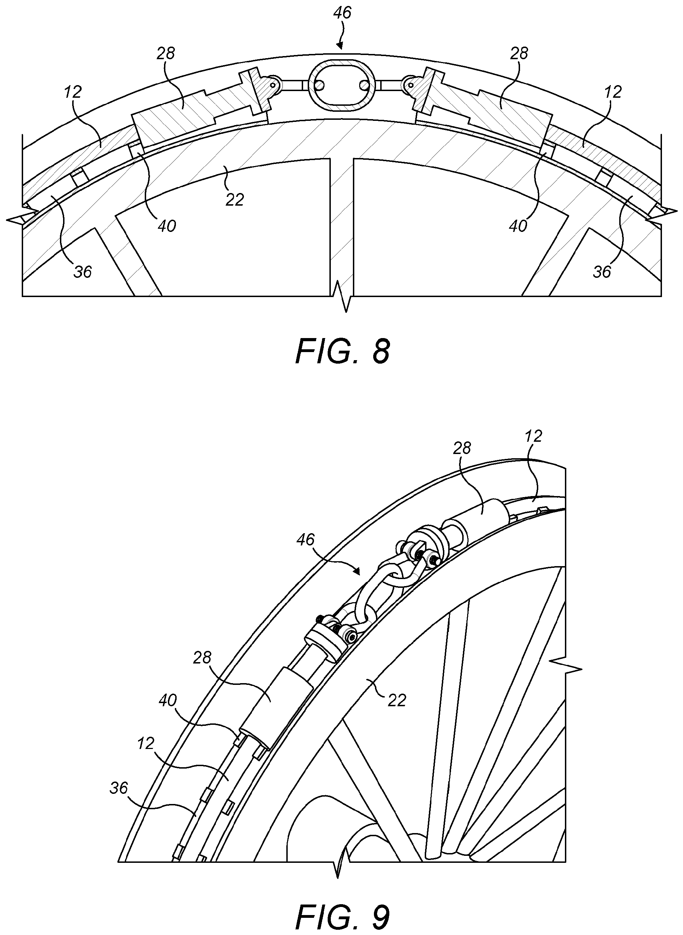

Figures 8 and 9 show the cradles 36 and the pipelines 12 lying on concentric part-circular curves that complement the circumferential curvature of the guide 22 of the PLSV 10, exemplified here by a guide wheel.

As noted above, the supports are not fixed to the pipelines 12 in the example shown in Figures 5 to 9. However, Figures 10 and 11a to 11c show another possibility, in which each support 40 is fixed to the pipeline 12, for example by a strap 48 that wraps over the pipeline 12.

Figure 11a shows that the transversely-concave upper surface 42 of the cradle 36 receives and directly supports the head 28. The upper surface 42 of the cradle 36 has a radius of curvature corresponding to that of the outer surface of the head 28, centred on an axis of curvature that is coaxial with the central longitudinal axis 32 of the pipeline 12 and the head 28.

In this example, a proximally-tapering bend stiffener 30 adjoins the head 28 and is restrained by a shallow support 40, also shown in Figure 11b. The height or radial thickness of the support 40 corresponds to the difference in radius between the outside of the bend stiffener 30 and the upper surface 42 of the cradle 36, with respect to the central longitudinal axis 32 of the pipeline 12.

Further, relatively deep, supports 40 extend between the pipeline 12 and the upper surface 42 of the cradle 36 as also shown in Figure 11c. The height or radial thickness of those supports 40 corresponds to the greater difference in radius between the outside of the pipeline 12 and the upper surface 42 of the cradle 36, with respect to the central longitudinal axis 32 of the pipeline 12.

Decoupling the cradle 36 from a pipeline 12 is also shown in Figure 12, where the pipeline 12 straightens and lifts away from the supports 40 as also shown in Figure 13a. Conversely, in Figure 13b, the supports 40 are fixed to the pipeline 12, for example by straps 48 that wrap over the pipeline 12, but are free to lift away from the cradle 36. In Figure 13c, the supports 40 can extend, for example telescopically, while remaining attached to both the pipeline 12 and the cradle 36. The supports 40 could have springs that bias the pipeline 12 toward the cradle 36 and/or restraints that limit movement of the pipeline 12 away from the cradle 36. In all of those cases, the cradle 36 is suitably fixed to the head 28, for example by one or more straps 48 that wrap over the head 28 as shown in Figures 10, 11a and 12.

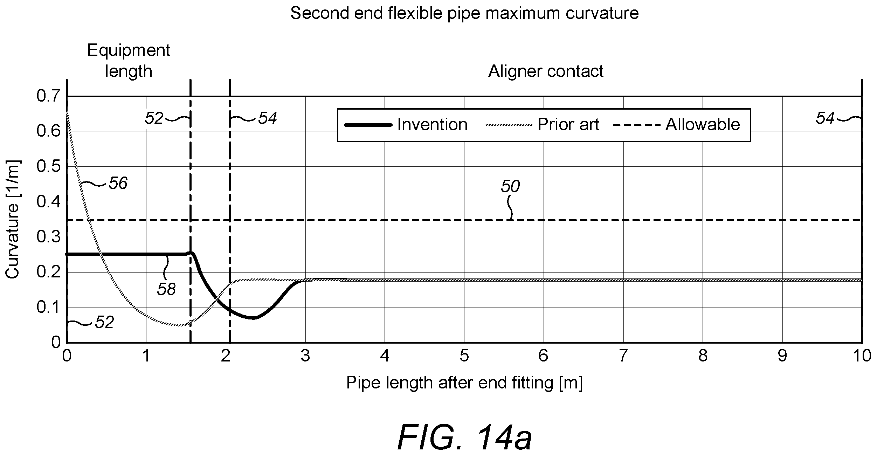

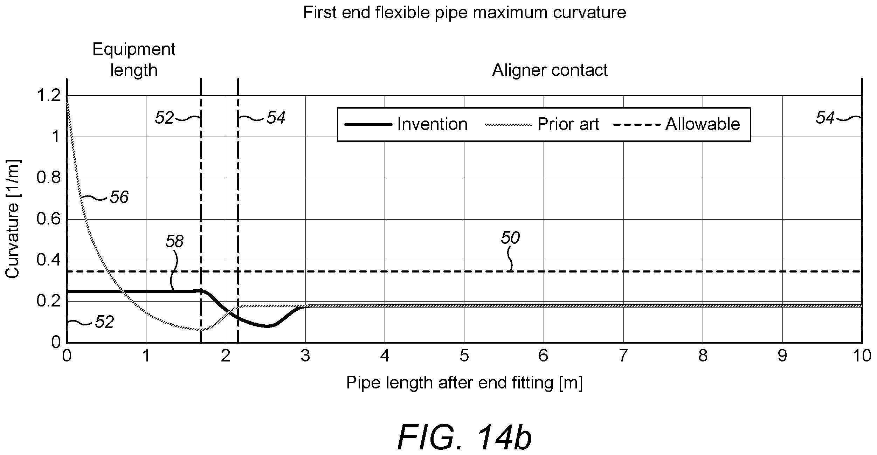

Turning finally to Figures 14a and 14b, these graphs plot maximum curvature of the pipeline 12 against distance from the proximal end of a rigid end fitting of the pipeline 12 such as a head 28, modelled in each case when passing over a curved guide 22 such as a guide wheel. Figure 14a represents the second or trailing end of a first pipeline 12 and Figure 14b represents the first or leading end of a second pipeline 12 joined end-to-end to the trailing end of the first pipeline 12 by a link 46 as shown in Figures 6 and 7.

In each graph, the maximum allowable curvature of the pipeline 12 is represented by a horizontal dashed line 50. The 'equipment length' of the cradle 36 is represented by a first pair of vertical dashed lines 52, shown to the left. The 'aligner contact' length over which the pipeline 12 contacts the guide 22 is represented by a second pair of vertical dashed lines 54, shown to the right. A short gap between those pairs of lines 52, 54 corresponds to where the pipeline 12 hangs between the cradle 36 and the guide 22.

It will be noted in both cases that when modelling the prior art in the absence of the cradle 36 of the invention, as shown by plot 56, the curvature of the pipeline 12 exceeds the allowable maximum 50 when approaching the head 28. In contrast, when the pipeline 12 and the head 28 are supported by the cradle 36 of the invention, as shown by plot 58, the curvature of the pipeline 12 always remains within the allowable maximum 50.

When a cradle 36 supporting a pipeline 12 has passed over a guide 22, the cradle 36 is suitably removed from the pipeline 12 before that part of the pipeline 12 passes through the hold-back system 20 on the tower 18. However, in principle, the cradle 36 could remain attached to the pipeline 12 as the pipeline 12 is launched into the water.

Many variations are possible within the inventive concept. For example, an upper or radially outer surface 42 of the cradle 36 could be shaped with one or more protrusions or recesses to complement and engage with the external shape of the head 28.

There could be any suitable number of supports 40 between the cradle 36 and the pipeline 12, from one support 40 upwards.

The cradle 36 preferably underlies all, or substantially all, of the length of the head 28 but could instead support only part or a major part of the length of the head 28, hence terminating proximally relative to a distal end of the head 28.

The pipeline 12 could converge with the cradle in a proximal direction to minimise stress on the pipeline 12. For example, the supports 40 could reduce or step down in height progressively in a proximal direction away from the head 28.

The cradle 36 and supports 40 can be made suitable for accessories other than the head 28, such as bend stiffeners, buoys, clamps or ballast weights.

The inventive concept could be applied when laying flexible elongate subsea elements other than pipelines, such as cables or umbilicals.

## Claims

1. A method of laying an assembly of a flexible elongate element (12) and a rigid accessory (28) into water from an installation vessel (10), the method comprising:
advancing the assembly with the accessory (28) and the element (12) in longitudinal series and with an elongate longitudinally-curved cradle (36) attached to the assembly, the cradle (36) overlapping longitudinally with both the element (12) and the accessory (28); and
advancing the assembly and the cradle (36) together over a longitudinally-convex guide (22) mounted on a lay tower of the installation vessel (10), with the cradle (36) interposed between the assembly on an upper side of the cradle (36) and the guide (22) on a lower side of the cradle (36).

2. The method of Claim 1, wherein the lower side of the cradle (36) has a radius of longitudinally concave curvature that substantially matches a radius of longitudinally convex curvature of the guide (22).

3. The method of Claim 1 or Claim 2, wherein the lower side of the cradle (36) has transversely convex curvature.

4. The method of Claim 3, wherein the guide (22) comprises a longitudinally-extending channel (24) and the lower side of the cradle (36) has a radius of transversely convex curvature that substantially matches a radius of transversely concave curvature of the channel (24).

5. The method of any preceding claim, wherein the upper side of the cradle (36) has a radius of transversely concave curvature that substantially matches a radius of transversely convex curvature of the accessory (28).

6. The method of any preceding claim, wherein the upper side of the cradle (36) has a radius of transversely concave curvature that is centred on an axis parallel to, or coincident with, a central longitudinal axis of the element (12).

7. The method of any preceding claim, comprising supporting the element (12) on one or more supports (40) disposed on a proximal side of the accessory (28), the or each support (40) extending radially between the upper side of the cradle (36) and an outer surface of the element (12).

8. The method of Claim 7, wherein the or each support (40) has an end face (44) with transversely concave curvature.

9. The method of Claim 7 or Claim 8, wherein the or each support (40) extends radially to a height corresponding to a cross-sectional radius of the accessory (28) minus a cross-sectional radius of the element (12).

10. The method of any preceding claim, comprising allowing the element (12) to move away from the upper side of the cradle (36) as the assembly and the cradle (36) are advanced together toward or away from the guide (22).

11. The method of any preceding claim, comprising restraining movement of the element (12) toward the upper side of the cradle (36).

12. The method of any preceding claim, wherein the accessory (28) is a head at an end of the element (12).

13. The method of any preceding claim, comprising advancing first and second assemblies over the guide (22), the assemblies being linked end-to-end and each having a respective cradle (36) interposed between the assembly and the guide (22).

14. The method of Claim 13, wherein the first and second assemblies are linked via their respective accessories (28).

15. The method of Claim 13 or Claim 14, comprising holding a link (46) between the assemblies spaced radially from the guide (22).

16. The method of any preceding claim, comprising removing the cradle (36) from the assembly before advancing the assembly through a hold-back system (20) of the installation vessel (10).

17. An assembly for subsea installation comprising a flexible elongate element (12) and a rigid accessory (28) in longitudinal series, in combination with an elongate longitudinally-curved cradle (36) attached to, and laterally offset from a longitudinal axis of, the assembly, wherein the cradle (36) extends between and overlaps longitudinally with the element (12) and the accessory (28) and presents a first, longitudinally-convex side to the assembly opposed to a second, longitudinally-concave side extending along a length of the cradle (36).

18. The assembly of Claim 17, comprising one or more supports (40) disposed on a proximal side of the accessory (28) that extend between the first side of the cradle (36) and an outer surface of the element (12).

19. The assembly of Claim 18, wherein the or each support (40) has an end face with transversely concave curvature.

20. The assembly of Claim 18 or Claim 19, wherein the or each support (40) extends to a height corresponding to a cross-sectional radius of the accessory (28) minus a cross-sectional radius of the element (12).

21. The assembly of any of Claims 18 to 20, wherein the or each support (40) is fixed to the element (12) and is separable from the cradle (36).

22. The assembly of Claim 17 or Claim 18, wherein the second side of the cradle (36) has transversely convex curvature.

23. The assembly of any of Claims 17 to 22, wherein the first side of the cradle (36) has a radius of transversely concave curvature that substantially matches a radius of transversely convex curvature of the accessory (28).

24. The assembly of any of Claims 17 to 23, wherein the first side of the cradle (36) has a radius of transversely concave curvature that is centred on an axis parallel to, or coincident with, a central longitudinal axis of the element (12).

25. A combination of a first assembly and a second assembly, each assembly being according to any of Claims 17 to 24, wherein the first assembly and the second assembly are linked end-to-end and each assembly is fitted with one of said elongate longitudinally-curved cradles (36).

26. The combination of Claim 25, wherein the first assembly and the second assembly are linked via their respective accessories (28).

## Patentansprüche

1. Verfahren zum Verlegen einer Anordnung aus einem biegsamen langgestreckten Element (12) und einem starren Zubehör (28) in Wasser von einem Installationsschiff (10) aus, wobei das Verfahren Folgendes umfasst:
Vorrücken der Anordnung mit dem Zubehör (28) und dem Element (12) in Längsfolge und mit einer an der Anordnung angebrachten, langgestreckten, in Längsrichtung gekrümmten Aufnahme (36), wobei die Aufnahme (36) in Längsrichtung sowohl das Element (12) als auch das Zubehör (28) überlappt; und
Vorrücken der Anordnung und der Aufnahme (36) zusammen über eine in Längsrichtung konvexe Führung (22), die auf einem Verlegeturm des Installationsschiffs (10) montiert ist, wobei die Aufnahme (36) zwischen der Anordnung auf einer Oberseite der Aufnahme (36) und der Führung (22) auf einer Unterseite der Aufnahme (36) angeordnet ist.

2. Verfahren nach Anspruch 1, wobei die Unterseite der Aufnahme (36) einen Radius von in Längsrichtung konkaver Krümmung aufweist, der im Wesentlichen einem Radius von in Längsrichtung konvexer Krümmung der Führung (22) gleicht.

3. Verfahren nach Anspruch 1 oder Anspruch 2, wobei die Unterseite der Aufnahme (36) eine in Querrichtung konvexe Krümmung aufweist.

4. Verfahren nach Anspruch 3, wobei die Führung (22) eine sich in Längsrichtung erstreckende Nut (24) aufweist und die Unterseite der Aufnahme (36) einen Radius von in Querrichtung konvexer Krümmung aufweist, der im Wesentlichen einem Radius von in Querrichtung konkaver Krümmung der Nut (24) entspricht.

5. Verfahren nach einem der vorangehenden Ansprüche, wobei die Oberseite der Aufnahme (36) einen Radius von in Querrichtung konkaver Krümmung aufweist, der im Wesentlichen einem Radius von in Querrichtung konvexer Krümmung des Zubehörs (28) gleicht.

6. Verfahren nach einem der vorangehenden Ansprüche, wobei die Oberseite der Aufnahme (36) einen Radius von in Querrichtung konkaver Krümmung aufweist, der auf einer Achse zentriert ist, die zu eine Längsmittelachse des Elements (12) parallel ist oder sich damit deckt.

7. Verfahren nach einem der vorangehenden Ansprüche, umfassend das Stützen des Elements (12) auf einem oder mehreren auf einer proximalen Seite des Zubehörs (28) angeordneten Trägern (40), wobei sich der oder jeder Träger (40) radial zwischen der Oberseite der Aufnahme (36) und einer Außenoberfläche des Elements (12) erstreckt.

8. Verfahren nach Anspruch 7, wobei der oder jeder Träger (40) eine Endfläche (44) mit in Querrichtung konkaver Krümmung aufweist.

9. Verfahren nach Anspruch 7 oder Anspruch 8, wobei sich der oder jeder Träger (40) radial bis auf eine Höhe erstreckt, die einem Querschnittsradius des Zubehörs (28) minus einem Querschnittsradius des Elements (12) entspricht.

10. Verfahren nach einem der vorangehenden Ansprüche, umfassend das Zulassen, dass sich das Element (12) von der Oberseite der Aufnahme (36) weg bewegt, wenn die Anordnung und die Aufnahme (36) zusammen in Richtung auf die Führung (22) oder davon weg vorgerückt werden.

11. Verfahren nach einem der vorangehenden Ansprüche, umfassend das Einschränken von Bewegung des Elements (12) in Richtung auf die Oberseite der Aufnahme (36).

12. Verfahren nach einem der vorangehenden Ansprüche, wobei das Zubehör (28) ein Kopf an einem Ende des Elements (12) ist.

13. Verfahren nach einem der vorangehenden Ansprüche, umfassend das Vorrücken einer ersten und einer zweiten Anordnung über die Führung (22), wobei die Anordnungen Ende-an-Ende gekoppelt sind und jeweils eine zwischen der Anordnung und der Führung (22) angeordnete jeweilige Aufnahme (36) aufweisen.

14. Verfahren nach Anspruch 13, wobei die erste und die zweite Anordnung über ihr jeweiliges Zubehör (28) gekoppelt sind.

15. Verfahren nach Anspruch 13 oder Anspruch 14, umfassend das Halten einer Kopplung (46) radial von der Führung (22) beabstandet zwischen den Anordnungen.

16. Verfahren nach einem der vorangehenden Ansprüche, umfassend das Entfernen der Aufnahme (36) von der Anordnung vor dem Vorrücken der Anordnung durch ein Hold-Back-System (20) des Installationsschiffs (10).

17. Anordnung zur Unterseeinstallation, umfassend ein biegsames langgestrecktes Element (12) und ein starres Zubehör (28) in Längsfolge in Kombination mit einer langgestreckten, in Längsrichtung gekrümmten Aufnahme (36), die an der Anordnung angebracht und seitlich von einer Längsachse derselben versetzt ist, wobei sich die Aufnahme (36) zwischen dem Element (12) und dem Zubehör (28) erstreckt und diese in Längsrichtung überlappt und der Anordnung eine erste, in Längsrichtung konvexe Seite darbietet, die einer zweiten, in Längsrichtung konkaven Seite, die sich entlang einer Länge der Aufnahme (36) erstreckt, entgegengesetzt ist.

18. Anordnung nach Anspruch 17, umfassend einen oder mehrere auf einer proximalen Seite des Zubehörs (28) angeordnete Träger (40), die sich zwischen der ersten Seite der Aufnahme (36) und einer Außenoberfläche des Elements (12) erstrecken.

19. Anordnung nach Anspruch 18, wobei der oder jeder Träger (40) eine Endfläche mit einer in Querrichtung konkaven Krümmung aufweist.

20. Anordnung nach Anspruch 18 oder Anspruch 19, wobei sich der oder jeder Träger (40) bis auf eine Höhe erstreckt, die einem Querschnittsradius des Zubehörs (28) minus einem Querschnittsradius des Elements (12) entspricht.

21. Anordnung nach einem der Ansprüche 18 bis 20, wobei der oder jeder Träger (40) an dem Element (12) befestigt ist und von der Aufnahme (36) trennbar ist.

22. Anordnung nach Anspruch 17 oder Anspruch 18, wobei die zweite Seite der Aufnahme (36) eine in Querrichtung konvexe Krümmung aufweist.

23. Anordnung nach einem der Ansprüche 17 bis 22, wobei die erste Seite der Aufnahme (36) einen Radius von in Querrichtung konkaver Krümmung aufweist, der im Wesentlichen einem Radius von in Querrichtung konvexer Krümmung des Zubehörs (28) gleicht.

24. Anordnung nach einem der Ansprüche 17 bis 23, wobei die erste Seite der Aufnahme (36) einen Radius von in Querrichtung konkaver Krümmung aufweist, der auf einer Achse zentriert ist, die zu eine Längsmittelachse des Elements (12) parallel ist oder sich damit deckt.

25. Kombination aus einer ersten Anordnung und einer zweiten Anordnung, wobei die Anordnungen jeweils nach einem der Ansprüche 17 bis 24 sind, wobei die erste Anordnung und die zweite Anordnung Ende-an-Ende gekoppelt sind und jede Anordnung mi einer der langgestreckten, in Längsrichtung gekrümmten Aufnahmen (36) ausgestattet ist.

26. Kombination nach Anspruch 25, wobei die erste Anordnung und die zweite Anordnung über ihr jeweiliges Zubehör (28) gekoppelt sind.

## Revendications

1. Procédé de pose d'un ensemble composé d'un élément allongé flexible (12) et d'un accessoire rigide (28) dans l'eau à partir d'un navire d'installation (10), le procédé comprenant :
faire avancer l'ensemble avec l'accessoire (28) et l'élément (12) en file longitudinale et avec un berceau allongé longitudinalement incurvé (36) attaché à l'ensemble, le berceau (36) étant longitudinalement en superposition à la fois avec l'élément (12) et avec l'accessoire (28) ; et
faire avancer l'ensemble et le berceau (36) conjointement sur un guide longitudinalement convexe (22) installé sur une tour de pose du navire d'installation (10), le berceau (36) étant interposé entre l'ensemble sur un côté supérieur du berceau (36) et le guide (22) sur un côté inférieur du berceau (36).

2. Procédé selon la revendication 1, dans lequel le côté inférieur du berceau (36) présente un rayon de courbure longitudinalement concave qui correspond sensiblement à un rayon de courbure longitudinalement convexe du guide (22).

3. Procédé selon la revendication 1 ou la revendication 2, dans lequel le côté inférieur du berceau (36) présente une courbure transversalement convexe.

4. Procédé selon la revendication 3, dans lequel le guide (22) comprend un canal s' étendant longitudinalement (24) et le côté inférieur du berceau (36) présente un rayon de courbure transversalement convexe qui correspond sensiblement à un rayon de courbure transversalement concave du canal (24).

5. Procédé selon l'une quelconque des revendications précédentes, dans lequel le côté supérieur du berceau (36) présente un rayon de courbure transversalement concave qui correspond sensiblement à un rayon de courbure transversalement convexe de l'accessoire (28).

6. Procédé selon l'une quelconque des revendications précédentes, dans lequel le côté supérieur du berceau (36) présente un rayon de courbure transversalement concave qui est centré sur un axe parallèle à, ou coïncidant avec, un axe longitudinal central de l'élément (12).

7. Procédé selon l'une quelconque des revendications précédentes, comprenant le fait de mettre l'élément (12) en appui sur un ou plusieurs supports (40) disposés sur un côté proximal de l'accessoire (28), le ou chaque support (40) s'étendant radialement entre le côté supérieur du berceau (36) et une surface extérieure de l'élément (12).

8. Procédé selon la revendication 7, dans lequel le ou chaque support (40) comporte une face d'extrémité (44) présentant une courbure transversalement concave.

9. Procédé selon la revendication 7 ou la revendication 8, dans lequel le ou chaque support (40) s'étend radialement jusqu'à une hauteur correspondant à un rayon en section transversale de l'accessoire (28) moins un rayon en section transversale de l'élément (12).

10. Procédé selon l'une quelconque des revendications précédentes, comprenant le fait de permettre à l'élément (12) de s'écarter du côté supérieur du berceau (36) tandis qu'on fait avancer l'ensemble et le berceau (36) conjointement de façon à les approcher ou les éloigner du guide (22).

11. Procédé selon l'une quelconque des revendications précédentes, comprenant le fait de limiter un mouvement de l'élément (12) vers le côté supérieur du berceau (36).

12. Procédé selon l'une quelconque des revendications précédentes, dans lequel l'accessoire (28) est une tête à une extrémité de l'élément (12).

13. Procédé selon l'une quelconque des revendications précédentes, comprenant le fait de faire avancer des premier et second ensembles sur le guide (22), les ensembles étant reliés bout à bout et comportant chacun un berceau (36) respectif interposé entre l'ensemble et le guide (22).

14. Procédé selon la revendication 13, dans lequel les premier et second ensembles sont reliés par le biais de leurs accessoires (28) respectifs.

15. Procédé selon la revendication 13 ou la revendication 14, comprenant le fait de maintenir un lien (46) entre les ensembles radialement espacé du guide (22).

16. Procédé selon l'une quelconque des revendications précédentes, comprenant le fait de retirer le berceau (36) de l'ensemble avant de faire avancer l'ensemble à travers un système de retenue (20) du navire d'installation (10).

17. Ensemble pour une installation sous-marine comprenant un élément allongé flexible (12) et un accessoire rigide (28) en file longitudinale, en combinaison avec un berceau allongé longitudinalement incurvé (36) attaché à l'ensemble et décalé latéralement d'un axe longitudinal de celui-ci, dans lequel le berceau (36) s'étend entre l'élément (12) et l'accessoire (28) et est longitudinalement en superposition avec ceux-ci, et présente à l'ensemble un premier côté longitudinalement convexe opposé à un second côté longitudinalement concave s'étendant le long d'une longueur du berceau (36).

18. Ensemble selon la revendication 17, comprenant un ou plusieurs supports (40) disposés sur un côté proximal de l'accessoire (28) qui s'étendent entre le premier côté du berceau (36) et une surface extérieure de l'élément (12).

19. Ensemble selon la revendication 18, dans lequel le ou chaque support (40) comporte une face d'extrémité présentant une courbure transversalement concave.

20. Ensemble selon la revendication 18 ou la revendication 19, dans lequel le ou chaque support (40) s'étend jusqu'à une hauteur correspondant à un rayon en section transversale de l'accessoire (28) moins un rayon en section transversale de l'élément (12).

21. Ensemble selon l'une quelconque des revendications 18 à 20, dans lequel le ou chaque support (40) est fixé à l'élément (12) et est séparable du berceau (36).

22. Ensemble selon la revendication 17 ou la revendication 18, dans lequel le second côté du berceau (36) présente une courbure transversalement convexe.

23. Ensemble selon l'une quelconque des revendications 17 à 22, dans lequel le premier côté du berceau (36) présente un rayon de courbure transversalement concave qui correspond sensiblement à un rayon de courbure transversalement convexe de l'accessoire (28).

24. Ensemble selon l'une quelconque des revendications 17 à 23, dans lequel le premier côté du berceau (36) présente un rayon de courbure transversalement concave qui est centré sur un axe parallèle à, ou coïncidant avec, un axe longitudinal central de l'élément (12).

25. Combinaison d'un premier ensemble et d'un second ensemble, chaque ensemble étant conforme à l'une quelconque des revendications 17 à 24, dans laquelle le premier ensemble et le second ensemble sont reliés bout à bout et chaque ensemble est équipé d'un desdits berceaux allongés longitudinalement incurvés (36).

26. Combinaison selon la revendication 25, dans laquelle le premier ensemble et le second ensemble sont reliés par le biais de leurs accessoires (28) respectifs.
